# EUROPEAN PATENT SPECIFICATION

(11) **EP 4 104 278 B1**
(45) Date of publication and mention of the grant of the patent: **24.01.2024**
(21) Application number: 21703305.9
(22) Date of filing: 08.01.2021
(51) Int. Cl.: H02K 7/116, H02K 1/18, F16H 1/28

(54) **AN ELECTROMECHANICAL DEVICE**
ELEKTROMECHANISCHE VORRICHTUNG
DISPOSITIF ÉLECTROMÉCANIQUE

(30) Priority: 11.02.2020 FI 20205142
(43) Date of publication of application: 21.12.2022
(73) Proprietor: Lappeenrannan-Lahden teknillinen yliopisto LUT, 53851 Lappeenranta (FI)
(72) Inventor: PYRHÖNEN, Juha, 53851 Lappeenranta (FI); SCHERMAN, Eero, 53851 Lappeenranta (FI)
(74) Representative: Väänänen, Janne Kalervo
(86) International application number: PCT/FI2021/050012
(87) International publication number: WO 2021/160927

(56) References cited:
- EP-A1- 2 093 017
- CN-A- 108 730 422
- US-A- 5 685 798
- US-A- 5 782 593
- US-A1- 2013 062 466

## Description

### Field of the disclosure

The disclosure relates to an electromechanical device that is a combination of a planetary gear and an electric machine.

### Background

In many cases, there is a need for an electromechanical device that is compact in size but can nevertheless produce high torque. Maximum torque that can be produced by an electric machine is limited by physical dimensions of the rotor of the electric machine because magnetic flux density acting on an airgap of the electric machine is limited as well as electric current carried by armature windings of the electric machine is limited. The magnetic flux density cannot be practically increased any more when a saturation point of iron has been exceeded. Increasing the electric current increases resistive losses in the armature windings. The resistive losses are increased proportionally to the square of the electric current whereas the torque is increased proportionally to the electric current when the magnetic flux density does not change. Thus, increasing the electric current over a reasonable point impairs the efficiency. Furthermore, increasing the electric current makes it more and more challenging to remove heat caused by the resistive losses. Therefore, a desire to construct a compact but nevertheless high-torque electromechanical device leads typically to a combination of a gear and an electric machine.

Publication WO2008069707 describes a hub unit that comprises an electric machine adapted to drive a wheel. The hub unit comprises planetary gears coupled in series between the electric machine and a wheel hub. The construction described in WO2008069707 is however quite long in the axial direction because the electric machine and the planetary gears are axially successively. Publication WO2008131358 describes a wheel motor unit that comprises a housing enclosing an electric motor and defining a cylindrical cavity extending into a space at the center of the electric motor. The cavity contains a transmission for transferring torque from a shaft of the electric motor to a wheel hub. The transmission may comprise for example a planetary gear. The axial length of the wheel motor unit can be small because of the above-described mechanical arrangement where the transmission, e.g. the planetary gear, is inside the electric motor. A need to arrange a mechanical support for stationary parts of the transmission, e.g. a gear ring of the planetary gear, in an interior space of a rotating rotor requires mechanical structures which need room in a radial direction of the wheel motor unit. Thus, the radial room for the transmission e.g. a planetary gear is reduced, or the radial diameter of the wheel motor unit must be increased. Document CN 108 730 422 A describes an outer rotor motor integrated with a drive reduction mechanism.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In this document, the word "geometric" when used as a prefix means a geometric concept that is not necessarily a part of any physical object. The geometric concept can be for example a geometric point, a straight or curved geometric line, a geometric plane, a non-planar geometric surface, a geometric space, or any other geometric entity that is zero, one, two, or three dimensional.

In accordance with the present invention, there is provided a new electromechanical device that comprises:
- a connection shaft for connecting to a rotating element external to the electromechanical device,
- an outer rotor electric machine comprising a stator and a rotor,
- a planetary gear configured to transfer torque between the rotor and the connection shaft, the planetary gear comprising a gear ring, a sun wheel, planet wheels meshing with the gear ring and with the sun wheel, and a planet carrier supporting the planet wheels, and
- a rotor coupling system configured to couple the rotor to the sun wheel when a selector element of the rotor coupling system is in its first position and to couple the rotor to the planet carrier when the selector element of the rotor coupling system is in its second position.

The gear ring of the planetary gear is attached to the stator of the outer rotor electric machine so that the stator surrounds the gear ring. Thus, the electromechanical device can be short in its axial direction. Furthermore, the radial diameter of the above-mentioned planetary gear can be greater than in a case in which a stationary gear ring of a planetary gear is inside a cavity defined by a rotor of an inner rotor electric machine even if the diameter of the cavity defined by the rotor were the same as the diameter of the cavity defined by the stator of the above-mentioned outer rotor electric machine. A greater radial diameter of a planetary gear gives more freedom in designing a desired gear ratio as well as makes it easier to achieve a desired mechanical strength.

Various exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying embodiments when read in conjunction with the accompanying drawings.

The verbs "to comprise" and "to include" are used in this document as open limitations that neither exclude nor require the existence of also un-recited features. The features recited in the accompanied dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments and their advantages are explained in greater detail below in the sense of examples and with reference to the accompanying drawings, in which:
figure 1 illustrates an electromechanical device according to an exemplifying and non-limiting embodiment, which is outside the scope of the claimed invention.
figure 2 illustrates an electromechanical device according to another exemplifying and non-limiting embodiment, which is outside the scope of the claimed invention.
figure 3 illustrates an electromechanical device according to an exemplifying and non-limiting embodiment.

### Description of exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

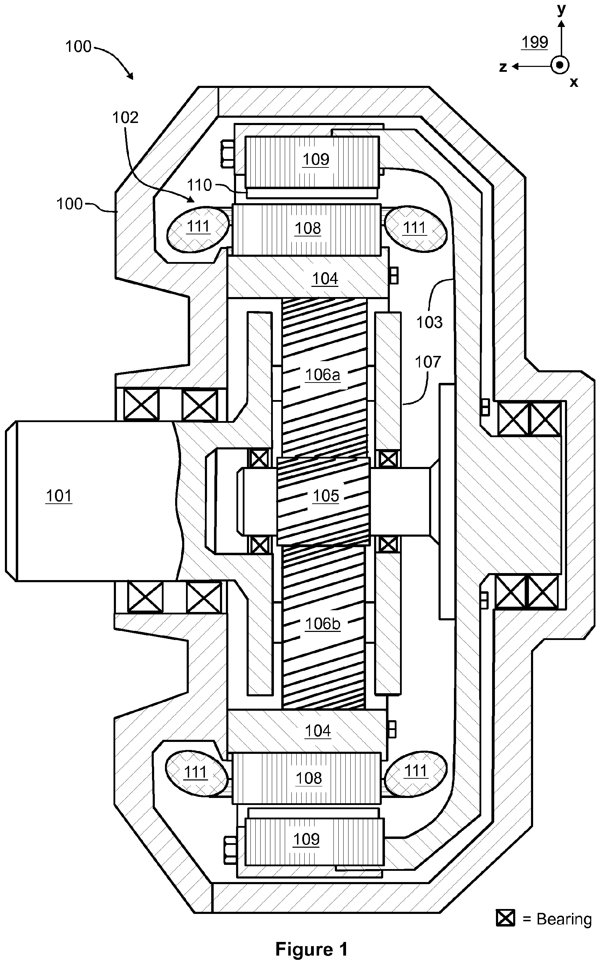

Figure 1 shows a section view of an electromechanical device 100 according to an exemplifying and non-limiting embodiment outside the scope of the claimed invention. The section is taken along a geometric section plane which is parallel with the yz-plane of a coordinate system 199. The electromechanical device 100 comprises a connection shaft 101 for connecting to a rotating element that is external to the electromechanical device 100. The external rotating element can be for example a shaft of an actuator, e.g. hydraulic pump, driven by the electromechanical device 100, or a shaft of a prime mover, e.g. a wind turbine, driving the electromechanical device 100 to produce electric energy. The electromechanical device 100 comprises an outer rotor electric machine that comprises a stator 102 and a rotor 103, where the rotor surrounds the stator. The electromechanical device 100 comprises a planetary gear configured to transfer torque between the rotor 103 and the connection shaft 101. The planetary gear comprises a gear ring 104, a sun wheel 105, planet wheels meshing with the gear ring and with the sun wheel, and a planet carrier 107 supporting the planet wheels.

In figure 1, two of the planet wheels are denoted with references 106a and 106b. The gear ring 104 of the planetary gear is attached to the stator 102 of the outer rotor electric machine so that the stator 102 surrounds the gear ring 104.

In the exemplifying electromechanical device 100 illustrated in figure 1, the outer rotor electric machine is a permanent magnet machine whose rotor 103 comprises permanent magnets. In figure 1, one of the permanent magnets is denoted with a reference 110. It is also possible that the outer rotor electric machine is an induction machine, an electrically excited synchronous machine, a reluctance machine, a switched reluctance machine, a flux switching machine, or some other kind of electric machine. In this exemplifying case, the rotor 103 comprises a rotor core structure 109 made of electrically insulated ferromagnetic sheets stacked in the axial direction of the outer rotor electric machine, i.e. in the z-direction of the coordinate system 199. As another exemplifying alternative, the rotor core structure may comprise ferrite or iron powder composites such as e.g. Soft Magnetic Composite SOMALOY^{®}. The outer rotor electric machine is mechanically advantageous because the centrifugal force presses the surface mounted permanent magnets against the rotor core structure 109 whereas in an inner rotor electric machine the centrifugal force tends to disengage surface mounted permanent magnets from a rotor core structure.

In the exemplifying electromechanical device 100 illustrated in figure 1, the stator 102 of the outer rotor electric machine comprises a stator core structure 108 constituted by a stack of electrically insulated ferromagnetic sheets stacked on each other in the axial direction of the outer rotor electric machine, i.e. in the z-direction of the coordinate system 199. As another exemplifying alternative, the stator core structure may comprise ferrite or iron powder composites such as e.g. Soft Magnetic Composite SOMALOY^{®}. The stator 102 comprises stator windings whose coil sides are located in stator slots between stator teeth of the stator core structure 108. The stator windings can be configured to constitute a multiphase winding for producing a rotating magnetic field when supplied with multiphase alternating electric currents. The multiphase winding can be e.g. a three-phase winding. In figure 1, section views of end-windings of the stator windings are denoted with a reference 111. The coil sides of the stator windings are not shown. The stator slots can be parallel with the axial direction of the outer rotor electric machine i.e. parallel with the z-axis of the coordinate system 199. It is however also possible that the stator 103 has skewed stator slots.

In the exemplifying electromechanical device 100 illustrated in figure 1, the rotor 103 of the outer rotor electric machine is fixedly connected to the sun wheel 105 of the planetary gear, and the planet carrier 107 of the planetary gear is fixedly connected to the connection shaft 101. Thus, in this exemplifying case, the planetary gear is configured to act as a speed reduction gear in a power transfer path from the outer rotor electric machine to the connection shaft 101.

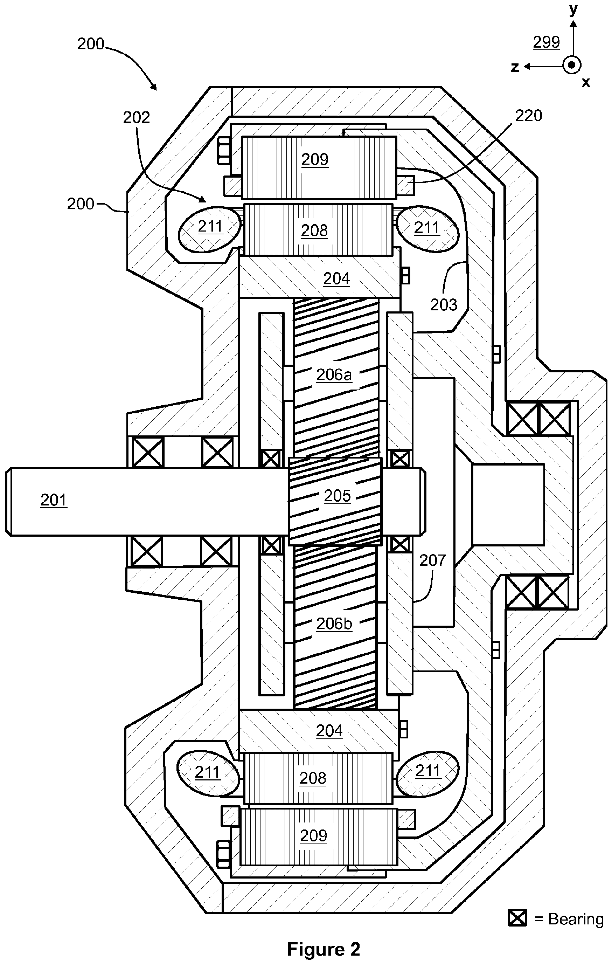

Figure 2 shows a section view of an electromechanical device 200 according to an exemplifying and non-limiting embodiment outside the scope of the claimed invention. The section is taken along a geometric section plane which is parallel with the yz-plane of a coordinate system 299. The electromechanical device comprises a connection shaft 201 for connecting to a rotating element that is external to the electromechanical device 200. The electromechanical device 200 comprises an outer rotor electric machine that comprises a stator 202 and a rotor 203, where the rotor surrounds the stator. The electromechanical device 200 comprises a planetary gear configured to transfer torque between the rotor 203 and the connection shaft 201. The planetary gear comprises a gear ring 204, a sun wheel 205, planet wheels meshing with the gear ring and with the sun wheel, and a planet carrier 207 supporting the planet wheels. In figure 2, two of the planet wheels are denoted with references 206a and 206b. The gear ring 204 of the planetary gear is attached to the stator 202 of the outer rotor electric machine so that the stator 203 surrounds the gear ring 204.

In the exemplifying electromechanical device 200 illustrated in figure 2, the outer rotor electric machine is an induction machine whose rotor 203 comprises a cage winding. In this exemplifying case, the rotor 203 comprises a rotor core structure 209 made of electrically insulated ferromagnetic sheets stacked in the axial direction of the outer rotor electric machine, i.e. in the z-direction of the coordinate system 299. The cage winding comprises rotor bars which are located in slots between rotor teeth of the rotor core structure 209. Furthermore, the cage winding comprises end-rings which are attached to ends of the rotor bars. In figure 2, a section of an end-ring is denoted with a reference 220. The rotor bars are not shown. The rotor bars can be parallel with the axial direction of the outer rotor electric machine i.e. parallel with the z-axis of the coordinate system 299. It is however also possible that the rotor 203 has skewed rotor bars. In this exemplifying case, the stator 202 of the outer rotor electric machine comprises a stator core structure 208 constituted by a stack of electrically insulated ferromagnetic sheets stacked on each other in the axial direction of the outer rotor electric machine. The stator 203 comprises stator windings whose coil sides are located in stator slots between stator teeth of the stator core structure 208. The stator windings can be configured to constitute a multiphase winding e.g. a three-phase winding. In figure 2, section views of end-windings of the stator windings are denoted with a reference 211. The coil sides of the stator windings are not shown. The stator slots can be parallel with the axial direction or the stator slots can be skewed.

In the exemplifying electromechanical device 200 illustrated in figure 2, the rotor 203 of the outer rotor electric machine is fixedly connected to the planet carrier 207 of the planetary gear, and the sun wheel 205 of the planetary gear is fixedly connected to the connection shaft 201. Thus, in this exemplifying case, the planetary gear is configured to act as a speed-increasing gear in a power transfer path from the outer rotor electric machine to the connection shaft 201.

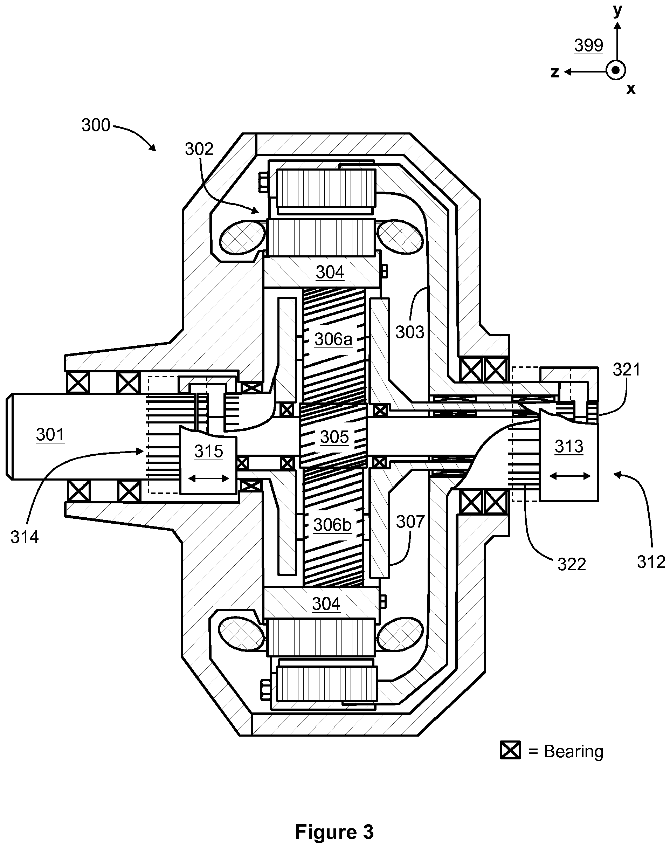

Figure 3 shows a section view of an electromechanical device 300 according to an exemplifying and non-limiting embodiment. The section is taken along a geometric section plane which is parallel with the yz-plane of a coordinate system 399. The electromechanical device comprises a connection shaft 301 for connecting to a rotating element that is external to the electromechanical device 300. The electromechanical device 300 comprises an outer rotor electric machine that comprises a stator 302 and a rotor 303, where the rotor surrounds the stator. The electromechanical device 300 comprises a planetary gear configured to transfer torque between the rotor 303 and the connection shaft 301. The planetary gear comprises a gear ring 304, a sun wheel 305, planet wheels meshing with the gear ring and with the sun wheel, and a planet carrier 307 supporting the planet wheels. In figure 3, two of the planet wheels are denoted with references 306a and 306b.

The gear ring 304 of the planetary gear is attached to the stator 302 of the outer rotor electric machine so that the stator 302 surrounds the gear ring 304.

The exemplifying electromechanical device 300 illustrated in figure 3 comprises a rotor coupling system 312 and a shaft coupling system 314 with the aid of which it is possible select different gear ratios between the rotor 303 and the connection shaft 301. The rotor coupling system 312 is configured to couple the rotor 303 to the sun wheel 305 when a selector element 313 of the rotor coupling system is in its first position and to couple the rotor 303 to the planet carrier 307 when the selector element 313 is in its second position. The shaft coupling system 314 is configured to couple the connection shaft 301 to the planet carrier 307 when a selector element 315 of the shaft coupling system is in its first position and to couple the connection shaft 301 to the sun wheel 305 when the selector element 315 is in its second position. In the exemplifying situation shown in figure 3, the selector element 313 is in its first position in which the rotor 303 is coupled to the sun wheel 305 in a torque transferring way and the selector element 315 is in its first position in which the connection shaft 301 is coupled to the planet carrier 307 in a torque transferring way. In figure 3, the above-mentioned second positions of the selector elements 313 and 315 are depicted with dashed lines.

In the exemplifying electromechanical device 300 illustrated in figure 3, the selector element 313 is a rotor coupling sleeve that is movable in an axial direction relative to the rotor 303. The rotor coupling sleeve has a first inner surface comprising axial grooves which provide a rotationally rigid contact with the rotor 303. The rotor coupling sleeve has a second inner surface comprising axial grooves which provide a rotationally rigid contact with a first cogged surface 321 fixed with respect to the sun wheel 305 when the rotor coupling sleeve is in its first position and a rotationally rigid contact with a second cogged surface 322 fixed with respect to the planet carrier 307 when the rotor coupling sleeve is in its second position. As shown in figure 3, there is an axial distance between the cogged surfaces 321 and 322. The rotor coupling sleeve is free from contacts with the cogged surfaces 321 and 322 when the rotor coupling sleeve is in its third position between the above-mentioned first and second positions. Thus, the third position of the rotor coupling sleeve implements a neutral gear.

In the exemplifying electromechanical device 300 illustrated in figure 3, the selector element 315 is a shaft coupling sleeve movable in an axial direction relative to the connection shaft 101. The shaft coupling sleeve has a first inner surface comprising axial grooves which provide a rotationally rigid contact with the connection shaft 101. The shaft coupling sleeve has a second inner surface comprising axial grooves which provide a rotationally rigid contact with a cogged surface fixed with respect to the planet carrier 307 when the shaft coupling sleeve is in its first position and a rotationally rigid contact with a cogged surface fixed with respect to the sun wheel 305 when the shaft coupling sleeve is in its second position. As shown in figure 3, there is an axial distance between the above-mentioned cogged surfaces of the shaft coupling system 314, and the shaft coupling sleeve is free from contacts with these cogged surfaces when the shaft coupling sleeve is in its third position between the above-mentioned first and second positions.

The specific examples provided in the description given above should not be construed as limiting the scope and/or the applicability of the accompanied claims. Lists and groups of examples provided in the description given above are not exhaustive unless otherwise explicitly stated.

## Claims

1. An electromechanical device (100, 200, 300) comprising:
- a connection shaft (101, 201, 301) for connecting to a rotating element external to the electromechanical device,
- an outer rotor electric machine comprising a stator (102, 202, 302) and a rotor (103, 203, 303), and
- a planetary gear configured to transfer torque between the rotor and the connection shaft, the planetary gear comprising a gear ring (104, 204, 302), a sun wheel (105, 205, 305), planet wheels (106a, 106b, 206a, 206b, 306a, 306b) meshing with the gear ring and with the sun wheel, and a planet carrier (107, 207, 307) supporting the planet wheels,
wherein the gear ring of the planetary gear is attached to the stator of the outer rotor electric machine so that the stator surrounds the gear ring, **characterized in that** the electromechanical device comprises a rotor coupling system (312) configured to couple the rotor (303) to the sun wheel (305) when a selector element (313) of the rotor coupling system is in its first position and to couple the rotor to the planet carrier (307) when the selector element of the rotor coupling system is in its second position.

2. An electromechanical device according to claim 1, wherein the stator (102, 202) comprises a stator core structure (108, 208) constituted by a stack of electrically insulated ferromagnetic sheets stacked on each other in an axial direction of the outer rotor electric machine.

3. An electromechanical device according to claim 1 or 2, wherein the rotor (103, 203) comprises a rotor core structure (109, 209) constituted by a stack of electrically insulated ferromagnetic sheets stacked on each other in an axial direction of the outer rotor electric machine.

4. An electromechanical device (100) according to any one of claims 1-3, wherein the outer rotor electric machine is a permanent magnet machine in which the rotor (103) comprises permanent magnets (110).

5. An electromechanical device (200) according to any one of claims 1-3, wherein the outer rotor electric machine is an induction machine in which the rotor (203) comprises a cage winding.

6. An electromechanical device (300) according to any one of claims 1-5, wherein the stator comprises a multiphase winding configured to produce a rotating magnetic field when supplied with multiphase alternating electric currents.

7. An electromechanical device according to claim 1, wherein the selector element (313) of the rotor coupling system is a rotor coupling sleeve movable in an axial direction relative to the rotor and having a first inner surface comprising axial grooves providing a rotationally rigid contact with the rotor, and a second inner surface comprising axial grooves providing a rotationally rigid contact with a first cogged surface (321) fixed with respect to the sun wheel when the rotor coupling sleeve is in its first position and a rotationally rigid contact with a second cogged surface (322) fixed with respect to the planet carrier when the rotor coupling sleeve is in its second position.

8. An electromechanical device according to claim 7, wherein there is an axial distance between the first cogged surface (321) and the second cogged surface (322), and the rotor coupling sleeve is free from contacts with the first and second cogged surfaces when the rotor coupling sleeve is in its third position between the first and second positions of the rotor coupling sleeve.

9. An electromechanical device according to any one of claims 1-8, wherein the electromechanical device comprises a shaft coupling system (314) configured to couple the connection shaft (301) to the planet carrier when a selector element (315) of the shaft coupling system is in its first position and to couple the connection shaft to the sun wheel when the selector element of the shaft coupling system is in its second position.

10. An electromechanical device according to claim 9, wherein the selector element (315) of the shaft coupling system is a shaft coupling sleeve movable in an axial direction relative to the connection shaft and having a first inner surface comprising axial grooves providing a rotationally rigid contact with the connection shaft and a second inner surface comprising axial grooves providing a rotationally rigid contact with a third cogged surface fixed with respect to the planet carrier when the shaft coupling sleeve is in its first position and with a fourth cogged surface fixed with respect to the sun wheel when the shaft coupling sleeve is in its second position.

11. An electromechanical device according to claim 10, wherein there is an axial distance between the third cogged surface and the forth cogged surface, and the shaft coupling sleeve is free from contacts with the third and fourth cogged surfaces when the shaft coupling sleeve is in its third position between the first and second positions of the shaft coupling sleeve.

## Patentansprüche

1. Elektromechanische Vorrichtung (100, 200, 300), aufweisend:
- eine Verbindungswelle (101, 201, 301) zur Verbindung mit einem rotierenden Element, das sich außerhalb der elektromechanischen Vorrichtung befindet,
- eine elektrische Außenläufermaschine, die einen Stator (102, 202, 302) und einen Rotor (103, 203, 303) aufweist, und
- ein Planetengetriebe, das dazu ausgebildet ist, ein Drehmoment zwischen dem Rotor und der Verbindungswelle zu übertragen, wobei das Planetengetriebe einen Zahnkranz (104, 204, 302), ein Sonnenrad (105, 205, 305) und Planetenräder (106a, 106b, 206a, 206b, 306a, 306b), die mit dem Zahnkranz und mit dem Sonnenrad kämmen, und einen die Planetenräder tragenden Planetenträger (107, 207, 307) aufweist,
wobei der Zahnkranz des Planetengetriebes am Stator der elektrischen Außenläufermaschine befestigt ist, so dass der Stator den Zahnkranz umgibt, **dadurch gekennzeichnet, dass** die elektromechanische Vorrichtung ein Rotorkopplungssystem (312) aufweist, das dazu ausgebildet ist, den Rotor (303) mit dem Sonnenrad (305) zu koppeln, wenn sich ein Auswahlelement (313) des Rotorkopplungssystems in seiner ersten Position befindet, und den Rotors mit dem Planetenträger (307) zu koppeln, wenn sich das Auswahlelement des Rotorkopplungssystems in seiner zweiten Position befindet.

2. Elektromechanische Vorrichtung nach Anspruch 1, wobei der Stator (102, 202) eine Statorkernstruktur (108, 208) aufweist, die aus einem Stapel elektrisch isolierter ferromagnetischer Bleche besteht, die in einer Axialrichtung der elektrischen Außenläufermaschine aufeinandergestapelt sind.

3. Elektromechanische Vorrichtung nach Anspruch 1 oder 2, wobei der Rotor (103, 203) eine Rotorkernstruktur (109, 209) aufweist, die aus einem Stapel elektrisch isolierter ferromagnetischer Bleche besteht, die in axialer Richtung der Außenläufermaschine aufeinandergestapelt sin.

4. Elektromechanische Vorrichtung (100) nach einem der Ansprüche 1-3, wobei die elektrische Außenläufermaschine eine Permanentmagnetmaschine ist, bei der der Rotor (103) Permanentmagnete (110) aufweist.

5. Elektromechanische Vorrichtung (200) nach einem der Ansprüche 1-3, wobei die elektrische Außenläufermaschine eine Induktionsmaschine ist, bei der der Rotor (203) eine Käfigwicklung aufweist.

6. Elektromechanische Vorrichtung (300) nach einem der Ansprüche 1-5, wobei der Stator eine mehrphasige Wicklung aufweist, die dazu ausgebildet ist, ein rotierendes Magnetfeld zu erzeugen, wenn sie mit mehrphasigen elektrischen Wechselströmen versorgt wird.

7. Elektromechanische Vorrichtung nach Anspruch 1, wobei das Auswahlelement (313) des Rotorkopplungssystems eine Rotorkopplungshülse ist, die in einer Axialrichtung relativ zu dem Rotor beweglich ist und aufweist eine erste Innenfläche, die axiale Nuten aufweist, die einen drehfesten Kontakt mit dem Rotor bereitstellen, und eine zweite Innenfläche, die axiale Nuten aufweist, die einen drehfesten Kontakt mit einer ersten gezahnten Fläche (321) bereitstellen, die in Bezug auf das Sonnenrad fixiert ist, wenn sich die Rotorkupplungshülse in ihrer ersten Position befindet, und einen drehfesten Kontakt mit einer zweiten gezahnte Fläche (322), die in Bezug auf den Planetenträger fixiert ist, wenn sich die Rotorkupplungshülse in ihrer zweiten Position befindet.

8. Elektromechanische Vorrichtung nach Anspruch 7, wobei zwischen der ersten gezahnten Fläche (321) und der zweiten gezahnten Fläche (322) ein axialer Abstand besteht, und die Rotorkupplungshülse frei von Kontakten mit der ersten und der zweiten gezahnten Fläche ist, wenn sich die Rotorkupplungshülse in ihrer dritten Position zwischen der ersten und zweiten Position der Rotorkupplungshülse befindet.

9. Elektromechanische Vorrichtung nach einem der Ansprüche 1-8, wobei die elektromechanische Vorrichtung ein Wellenkupplungssystem (314) aufweist, das dazu ausgebildet ist, die Verbindungswelle (301) mit dem Planetenträger zu koppeln, wenn sich ein Auswahlelement (315) des Wellenkupplungssystems in seiner ersten Position befindet, und die Verbindungswelle mit dem Sonnenrad zu koppeln, wenn sich das Auswahlelement des Wellenkupplungssystems in seiner zweiten Position befindet.

10. Elektromechanische Vorrichtung nach Anspruch 9, wobei das Auswahlelement (315) des Wellenkupplungssystems eine Wellenkupplungshülse ist, die in einer Axialrichtung relativ zur Verbindungswelle beweglich ist und aufweist eine erste Innenfläche, die axiale Nuten aufweist, die einen drehfesten Kontakt mit der Verbindungswelle bereitstellen, und eine zweite Innenfläche, die axiale Nuten aufweist, die einen drehfesten Kontakt bereitstellen mit einer dritten gezahnten Fläche, die in Bezug auf den Planetenträger fixiert ist, wenn sich die Wellenkupplungshülse in ihrer ersten Position befindet, und mit einer vierten gezahnten Fläche, die in Bezug auf das Sonnenrad fixiert ist, wenn sich die Wellenkupplungshülse in ihrer zweiten Position befindet.

11. Elektromechanische Vorrichtung nach Anspruch 10, wobei zwischen der dritten gezahnten Fläche und der vierten gezahnten Fläche ein axialer Abstand besteht, und die Wellenkupplungshülse frei von Kontakt mit der dritten und vierten gezahnten Fläche ist, wenn die Wellenkupplungshülse sich in ihrer dritten Position zwischen der ersten und zweiten Position der Wellenkupplungshülse befindet.

## Revendications

1. Dispositif électromécanique (100, 200, 300) comprenant :
- un arbre de connexion (101, 201, 301) pour la connexion à un élément rotatif externe au dispositif électromécanique,
- une machine électrique à rotor extérieur comprenant un stator (102, 202, 302) et un rotor (103, 203, 303), et
- un engrenage planétaire configuré pour transférer le couple entre le rotor et l'arbre de connexion, l'engrenage planétaire comprenant une couronne d'engrenage (104, 204, 302), une roue solaire (105, 205, 305), des roues planétaires (106a, 106b, 206a, 206b, 306a, 306b) s'engrenant avec la couronne d'engrenage et la roue solaire, et un porte-satellites (107, 207, 307) supportant les roues planétaires,
dans lequel la couronne d'engrenage de l'engrenage planétaire est fixe au stator de la machine électrique à rotor extérieur de façon à ce que le stator entoure la couronne d'engrenage, **caractérisé en ce que** le dispositif électromécanique comprend un système de couplage de rotor (312) configuré pour coupler le rotor (303) à la roue solaire (305) lorsqu'un élément de sélecteur (313) du système de couplage de rotor est dans sa première position et pour coupler le rotor au porte-satellites (307) lorsque l'élément de sélecteur du système de couplage de rotor est dans sa deuxième position.

2. Dispositif électromécanique selon la revendication 1, dans lequel le stator (102, 202) comprend une structure de noyau de stator (108, 208) constituée par une pile de feuilles ferromagnétiques électriquement isolées empilées l'une sur l'autre dans une direction axiale de la machine électrique à rotor extérieur.

3. Dispositif électromécanique selon la revendication 1 ou 2, dans lequel le rotor (103, 203) comprend une structure de noyau de rotor (109, 209) constituée par une pile de feuilles ferromagnétiques électriquement isolées empilées l'une sur l'autre dans une direction axiale de la machine électrique à rotor extérieur.

4. Dispositif électromécanique (100) selon l'une quelconque des revendications 1-3, dans lequel la machine électrique à rotor extérieur est une machine à aimant permanent dans laquelle le rotor (103) comprend des aimants permanents (110).

5. Dispositif électromécanique (200) selon l'une quelconque des revendications 1-3, dans lequel la machine électrique à rotor extérieur est une machine à induction dans laquelle le rotor (203) comprend un bobinage à cage.

6. Dispositif électromécanique (300) selon l'une quelconque des revendications 1-5, dans lequel le stator comprend un bobinage multiphases configuré pour produire un champ magnétique rotatif lorsqu'il est alimenté par des courants électriques alternatifs multiphases.

7. Dispositif électromécanique selon la revendication 1, dans lequel l'élément de secteur (313) du système de couplage de rotor est un manchon de couplage de rotor mobile dans une direction axiale par rapport au rotor et ayant une première surface intérieure comprenant des rainures axiales fournissant un contact rigide en rotation avec le rotor, et une deuxième surface intérieure comprenant des rainures axiales fournissant un contact rigide en rotation avec une première surface dentée (321) fixe par rapport à la roue solaire lorsque le manchon de couplage de rotor est dans sa première position, et un contact rigide en rotation avec une deuxième surface dentée (322) fixe par rapport au porte-satellites lorsque le manchon de couplage de rotor est dans sa deuxième position.

8. Dispositif électromécanique selon la revendication 7, dans lequel il y a une distance axiale entre la première surface dentée (321) et la deuxième surface dentée (322), et le manchon de couplage de rotor est exempt de contacts avec les première et deuxième surfaces dentées lorsque le manchon de couplage de rotor est dans sa troisième position entre les première et deuxième positions du manchon de couplage de rotor.

9. Dispositif électromécanique selon l'une quelconque des revendications 1 - 8, dans lequel le dispositif électromécanique comprend un système de couplage d'arbre (314) configuré pour coupler l'arbre de connexion (301) au porte-satellites lorsqu'un élément de sélecteur (315) du système de couplage d'arbre est dans sa première position et pour coupler l'arbre de connexion à la roue solaire lorsque l'élément de sélecteur du système de couplage d'arbre est dans sa deuxième position.

10. Dispositif électromécanique selon la revendication 9, dans lequel l'élément de sélecteur (315) du système de couplage d'arbre est un manchon de couplage d'arbre mobile dans une direction axiale par rapport à l'arbre de connexion et ayant une première surface intérieure comprenant des rainures axiales fournissant un contact rigide en rotation avec l'arbre de connexion, et une seconde surface intérieure comprenant des rainures axiales fournissant un contact rigide en rotation avec une troisième surface dentée fixe par rapport au porte-satellites lorsque le manchon de couplage d'arbre est dans sa première position et avec une quatrième surface dentée fixe par rapport à la roue solaire lorsque le manchon de couplage d'arbre est dans sa deuxième position.

11. Dispositif électromécanique selon la revendication 10, dans lequel il y a une distance axiale entre la troisième surface dentée et la quatrième surface dentée, et le manchon de couplage d'arbre est exempt de contacts avec les troisième et quatrième surfaces dentées lorsque le manchon de couplage d'arbre est dans sa troisième position entre les première et deuxième positions du manchon de couplage d'arbre.
